# EUROPEAN PATENT SPECIFICATION

(11) **EP 3 657 071 B1**
(45) Date of publication and mention of the grant of the patent: **15.06.2022**
(21) Application number: 19202619.3
(22) Date of filing: 11.10.2019
(51) Int. Cl.: F21V 15/01, F21V 19/00, F21V 23/00, F21V 8/00, F21Y 103/20, F21Y 115/10

(54) **MODULAR PANEL LAMP**
LAMPE MIT MODULAREM SCHIRM
LAMPE DE PANNEAU MODULAIRE

(30) Priority: 30.10.2018 CN 201821769164 U; 09.11.2018 CN 201821850354 U; 14.11.2018 CN 201821875656 U
(43) Date of publication of application: 27.05.2020
(73) Proprietor: Xiamen Eco Lighting Co., Ltd., Xiamen Fujian 363999 (CN)
(72) Inventor: GONG, Guangquan, XIAMEN, Fujian 363999 (CN); XIE, Zhencheng, XIAMEN, Fujian 363999 (CN); ZHANG, Jiansheng, XIAMEN, Fujian 363999 (CN); WU, Shouyong, XIAMEN, Fujian 363999 (CN); ZHENG, Liangjie, XIAMEN, Fujian 363999 (CN); LIU, Guanyinlian, XIAMEN, Fujian 363999 (CN)
(74) Representative: Deambrogi, Edgardo

(56) References cited:
- CN-U- 206 582 559
- CN-U- 208 779 278
- CN-U- 208 951 807
- CN-U- 208 951 810
- JP-A- 2016 167 440
- US-A1- 2005 002 172

## Description

### Technical Field

The present application relates to the technical field of lamp manufacturing, and in particular to a modular panel lamp.

### Background Art

At present, panel lamps available on the market have a relatively large number of structural members, and a lamp is assembled by cumbersome processes. It is also troublesome if one of the structural members needs to be replaced. Especially when an optical member is replaced, foreign matters are easily introduced, thereby resulting in poor appearance. Furthermore, certain basic knowledge of the panel lamp is required to complete the replacement and assembly, and the operation does not have high flexibility and has low efficiency. Meanwhile, conventionally, different parameter requirements for the same product can only be accomplished by assembling a new lamp, resulting in inventory accumulation. In this way, a lot of inconvenience during use is brought to a user, resulting in reduced user experience.

Japanese patent application JP2016167440A discloses a lighting device, including an LED module, a plate-type transparent material and a frame body to achieve high productivity. Chinese patent application CN206582559U discloses a two-shot injection molding panel light, through the provision of diffuser plate members, strips shaped light source substrate, optical components and backplane, eliminating the need for frame settings, reducing lamp weight and cost. US patent application US2005002172 discloses a diffuse reflection film, including a base film, a light reflection layer and a light diffusion layer. The display quality is improved, productivity is increased and its manufacturing costs are reduced.

In view of this, how to design and manufacture a modular panel lamp which facilitates quick assembly and replacement to meet users' demands is an technical problem that urgently needs to be improved in the technical field of lamp manufacturing at present.

### Summary

Objects of the present application include at least providing a modular panel lamp comprising a surface frame component, a light source component, a backlight component, and a drive component. The modular panel lamp is produced modularly, which facilitates quick assembly and replacement and increases the production efficiency. Furthermore, the modular panel lamp may be sold as an entire lamp or each modular component may be sold separately in rapid response to users' demands, and thus the modular panel lamp has high market flexibility. Moreover, the surface frame component is formed by splicing profiles, which facilitates realizing a narrow bezel of the panel lamp so as to increase the light emitting area.

An improvement of the technical problem in the present application is realized by the following technical solutions.

The present invention provides a modular panel lamp, comprising a surface frame component, a light source component, a backlight component, and a drive component. The light source component is connected with the surface frame component, the backlight component is connected with the surface frame component, and the drive component is connected with the light source component.

The surface frame component comprises four profiles connected in an end-to-end manner, the four profiles are detachably connected to form a frame body, and both the light source component and the backlight component are disposed in the frame body.

The four profiles comprise a wire outlet profile, a first profile, a second profile, and a third profile. The wire outlet profile is disposed opposite to the first profile, and the second profile is disposed opposite to the third profile; and the wire outlet profile is provided with a wire outlet port.

The wire outlet profile and the first profile are each further provided with a first fitting groove and a second fitting groove, respectively, the light source component is mounted in the first fitting grooves, and the backlight component is mounted in the second fitting grooves.

The four profiles are connected by using corner members; and both ends of each of the profiles are provided with fixation engaging slots in which the corner members are mounted. The first profile comprises a first bottom wall, a top wall, and a side wall which are integrally molded, the first bottom wall and the top wall are oppositely disposed, and are both connected with the side wall to form a first groove.

The first bottom wall is provided with a first bump, the top wall is provided with a second bump, and the first bump and the second bump are oppositely disposed so that the first groove is divided into the first fitting groove and the second fitting groove.

A mounting portion is protruded from a side of the top wall close to the bottom wall, the mounting portion is provided with the fixation engaging slot, the mounting portion, the second bump, and the first bottom wall collectively define the second fitting groove and serve the function of restricting the position of the backlight component.

Optionally, the light source component comprises two light source plates disposed opposite to each other, and the two light source plates are connected by a connecting wire; one of the light source plates is mounted in the first fitting groove of the wire outlet profile, and the other of the light source plates is mounted in the first fitting groove of the first profile.

Optionally, each of the light source plates is provided with a connecting end, and the connecting wire is connected with the connecting end. Alternatively, the connecting wire is welded to the light source plate.

Optionally, at least one of the light source plates is further provided with an input wire which is led out through the wire outlet port and is connected with the drive component.

Optionally, the drive component comprises a drive box and an output wire, wherein the output wire has one end connected with the drive box and the other end connected with the input wire.

Optionally, the modular panel lamp further comprises a wire outlet cover which is mounted to the frame body and covers the wire outlet port.

Optionally, the backlight component comprises a diffusion plate, a light guide plate, a light reflecting plate, a spacer, and a back plate, wherein the back plate is provided with a folded fixing portion by which the diffusion plate, the light guide plate, the light reflecting plate, and the spacer are fixed onto the back plate. The back plate is disposed in the second fitting grooves.

The present application provides another, not claimed, modular panel lamp, which further comprises a pressing strip component, wherein the pressing strip component abuts against an upper surface of the backlight component and is engaged with the surface frame component so that the backlight component is clamped between the pressing strip component and the surface frame component, and a clamping space for mounting is further formed between the pressing strip component and the surface frame component, the light source component is accommodated in the clamping space for mounting, and the backlight component is mounted to the surface frame component.

Optionally, two light source components are disposed at both ends of the backlight component and electrically connected with the backlight component.

Optionally, the backlight component comprises a back plate, an optical component, and a PCB board, both ends of the back plate have folded fixing portions which extend between the surface frame component and the pressing strip component, the optical component is disposed on a bottom side of the back plate and detachably connected with the back plate, the PCB board is disposed in the folded fixing portions, and the two light source components are electrically connected with the PCB boards and disposed at both ends of the optical component, respectively.

Optionally, the back plate is a metal back plate, wherein the metal back plate has a rectangular shape, and both ends of the metal back plate are folded to form the folded fixing portions.

Optionally, each folded fixing portion has an inverted U-shape and is overlapped on the surface frame component, and the PCB board is disposed in the folded fixing portions.

Optionally, the optical component comprises a diffusion plate, a light guide plate, and a light reflecting plate which are disposed in an overlapping manner, one side of the light reflecting plate is attached to the bottom of the back plate, one side of the light guide plate is attached to a side of the light reflecting plate that is remote from the back plate, and one side of the diffusion plate is attached to a side of the light guide plate that is remote from the light reflecting plate.

Optionally, the diffusion plate is a prismatic plate.

Optionally, each light source component may comprise any one of the four profiles and a light source plate, the profile is disposed between the pressing strip component and the surface frame component and accommodated in the clamping space for mounting, and the light source plate is embedded into the profile and electrically connected with the PCB board.

The present application provides another, not claimed, modular panel lamp, which further comprises a pressing strip component, wherein the backlight component is a diffusion plate, the surface frame component is a frame body formed by four side edges, and the frame body is open at both ends, the pressing strip component is disposed on an opening at one end of the surface frame component, the diffusion plate is disposed between the pressing strip component and the surface frame component, and the diffusion plate is fixed between the pressing strip component and the surface frame component by being clamped by the pressing strip component and the surface frame component.

Optionally, the drive component comprises a driver, a lamp-body connecting wire, a light-source-plate connecting wire, and connecting ends.

Optionally, each connecting end has one end connected with the light source component and the other end connected with the light-source-plate connecting wire, the lamp-body connecting wire has one end connected with the light-source-plate connecting wire and the other end connected with the driver, the light-source-plate connecting wire is used for connecting a plurality of connecting ends in series, and the lamp-body connecting wire is used for enabling an overall control of the respective connecting ends by the driver.

The modular panel lamp according to the present application has the following advantageous effects in several aspects:
The present application provides a modular panel lamp comprising a surface frame component, a light source component, a backlight component, and a drive component. The modular panel lamp has a modular structure which is convenient for assembly, replacement, and maintenance, and has high assembling efficiency, and the modular panel lamp may be sold as an entire lamp or each modular component may be sold separately, and thus the modular panel lamp has high market flexibility. Furthermore, the surface frame component comprises four profiles connected in an end-to-end manner, the four profiles are detachably connected to form a frame body, and such spliced frame body is assembled conveniently, and has a small package size during transportation which is convenient for transportation. Moreover, the frame body formed by splicing makes it easier to achieve a narrow bezel of the panel lamp so as to increase the light emitting area. The modular panel lamp has a simple structure, is convenient for assembly, has high production efficiency, facilitates realizing a narrow bezel of the panel lamp, has strong practicability, and thus has great generalization and application value.

### Brief Description of Drawings

In order to more clearly illustrate technical solutions of embodiments of the present application, drawings required for use in the embodiments will be described briefly below. It is to be understood that the drawings below are merely illustrative of some embodiments of the present application, and therefore should not be considered as limiting its scope. It will be understood by those of ordinary skill in the art that other relevant drawings can also be obtained from these drawings without any inventive effort.
FIG. 1 is a schematic view of an overall structure of a modular panel lamp according to a first embodiment of the present application;
FIG. 2 is an exploded schematic view of the structure of the modular panel lamp according to the first embodiment of the present application;
FIG. 3 is an exploded schematic view of a structure of a surface frame component of the modular panel lamp according to the first embodiment of the present application;
FIG. 4 is a schematic structural view of an end surface of a first profile of the modular panel lamp according to the first embodiment of the present application;
FIG. 5 is a schematic structural view of an end surface of a wire outlet profile of the modular panel lamp according to the first embodiment of the present application;
FIG. 6 is a schematic structural view of a light source component of the modular panel lamp according to the first embodiment of the present application;
FIG. 7 is a partial enlarged structural view of A in FIG. 6;
FIG. 8 is a partial enlarged structural view of B in FIG. 6;
FIG. 9 is a schematic structural view of a backlight component of the modular panel lamp according to the first embodiment of the present application;
FIG. 10 is a partial enlarged structural view of C in FIG. 9;
FIG. 11 is a schematic view showing the mounting of a light source component of the modular panel lamp according to the first embodiment of the present application;
FIG. 12 is a schematic view showing the mounting of a backlight component of the modular panel lamp according to the first embodiment of the present application;
FIG. 13 is a schematic view showing an operation of splicing a frame body of the modular panel lamp according to the first embodiment of the present application;
FIG. 14 is a schematic view showing the mounting of a wire outlet cover and a drive component of the modular panel lamp according to the first embodiment of the present application.
FIG. 15 is a schematic structural view of a modular panel lamp according to a second, not claimed, embodiment of the present application;
FIG. 16 is a schematic partial enlarged view of II in FIG. 15;
FIG. 17 is a schematic structural view of a backlight component of FIG. 15;
FIG. 18 is a schematic structural view of a light source component of FIG. 15;
FIG. 19 is a schematic structural view of a pressing strip component of FIG. 15;
FIG. 20 is a partial enlarged view of VI in FIG. 19;
FIG. 21 is a schematic view of a connection structure of a pressing strip component according to a not claimed embodiment of the present application;
FIG. 22 is a schematic structural view of a modular panel lamp according to a third, not claimed, embodiment of the present application.
FIG. 23 is a schematic exploded view showing the structure of the modular panel lamp according to the third embodiment of the present application;
FIG. 24 is a partial enlarged view of I in FIG. 23;
FIG. 25 is a schematic structural view of a light source component of the modular panel lamp according to the third embodiment of the present application;
FIG. 26 is a partial enlarged portion of II of FIG. 25;
FIG. 27 is a schematic structural view of a frame of a surface frame component of the modular panel lamp according to the third embodiment of the present application;
FIG. 28 is a partial view of an assembled structure of the modular panel lamp according to the third embodiment of the present application; and
FIG. 29 is a schematic structural view of a rotating member of the modular panel lamp according to the third embodiment of the present application.

Reference Numerals: 06-rotating member; 11-frame; 31-positioning hole; 32-fixing hole; 41-fixing plate; 43-first positioning portion; 51-driver; 52-lamp-body connecting wire; 61-connecting portion; 62-abutment portion; 100-modular panel lamp; 110, 03-surface frame component; 111-wire outlet profile; 112-first profile; 113-second profile; 114-third profile; 101-first bottom wall; 102-side wall; 103-top wall; 104-first bump; 105-second bump; 106-mounting portion; 1101-first fitting groove; 1103-second fitting groove; 1105-fixation engaging slot; 1107-wire outlet port; 120, 04-light source component; 121, 42-light source plate; 123, 53-(light-source-plate) connecting wire; 125, 54-connecting end; 127-input wire; 130, 02-backlight component; 131-back plate; 132-spacer; 133, 1335-light reflecting plate; 134, 1333-light guide plate; 135, 1331, 02-diffusion plate; 137, 1311-folded fixing portion; 139-electrical socket; 140, 05-drive component; 141-drive box; 143-output wire; 150-wire outlet cover; 151-corner member; 153-connector; 170, 01-pressing strip component; 233-optical component; 235-PCB board; 541-first terminal; 542-second terminal; 1111-first plate member; 1112-second plate member; 1113-second positioning portion; 1114-connecting pin; 1115-connecting hole.

### Detailed Description of Embodiments

In order to make the objects, technical solutions, and advantages of the embodiments of the present application more clear, the technical solutions of the embodiments of the present application will be described below clearly and completely with reference to the drawings of the embodiments of the present application. It is apparent that the embodiments to be described are some, but not all of the embodiments of the present application. Generally, the components of the embodiments of the present application, as described and illustrated in the figures herein, may be arranged and designed in a wide variety of different configurations.

Thus, the following detailed description of the embodiments of the present application, as represented in the figures, is not intended to limit the scope of the present application as claimed, but is merely representative of selected embodiments of the present application. All the other embodiments obtained by those of ordinary skill in the art in light of the embodiments of the present application without inventive efforts shall fall within the scope of the present application as claimed.

In the description of the present application, it should be understood that orientation or positional relations indicated by the terms such as "up" and "down" are the orientation or positional relations shown based on the figures, or the orientation or positional relations in which the inventive product is conventionally placed in use, or the orientation or positional relations usually understood by those skilled in the art, and these terms are intended only to facilitate describing the present application and simplifying the description, but not intended to indicate or imply that the referred devices or elements must be in a particular orientation or constructed or operated in the particular orientation, and therefore should not be construed as limiting the present application.

The terms such as "first", "second", and "third" in the present application are used for distinguishing the description only, and have no special meanings.

In the description of the present application, it should also be noted that the terms "provided", "mounted", "coupled", and "connected" should be understood broadly unless otherwise expressly specified or defined. For example, a connection may be fixed connection or detachable connection or integral connection, or may be direct coupling or indirect coupling via an intermediate medium. The specific meanings of the above-mentioned terms in the present application can be understood by those of ordinary skill in the art according to specific situations.

### First Embodiment

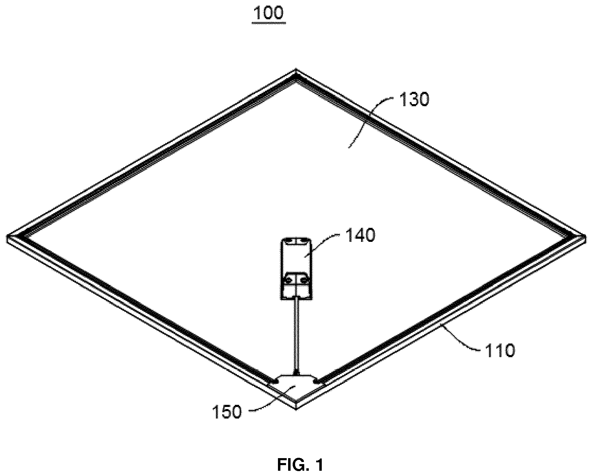

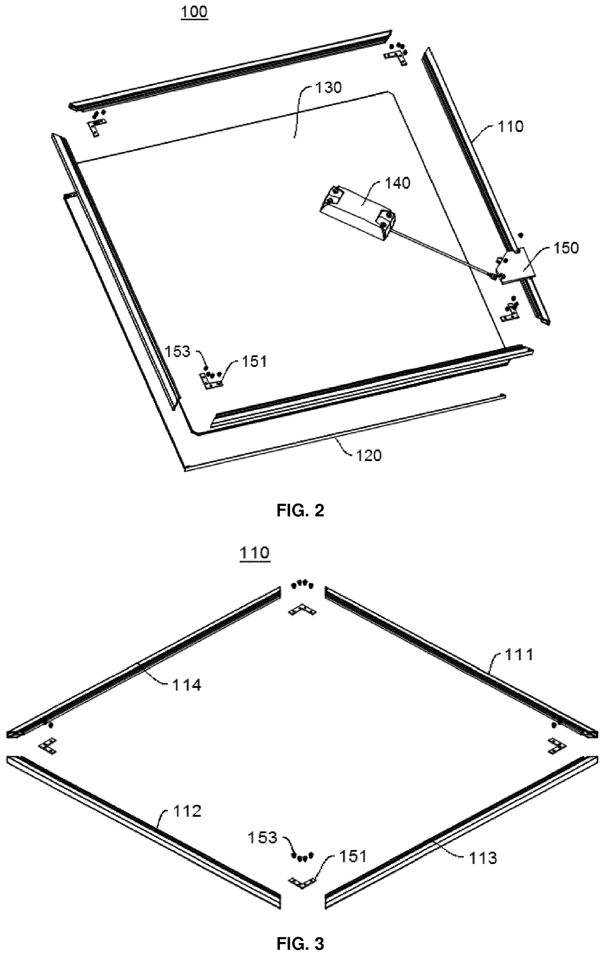

FIG. 1 is a schematic view of an overall structure of a modular panel lamp 100 according to a first embodiment of the present application, and FIG. 2 is an exploded schematic view of the structure of the modular panel lamp 100 according to the first embodiment of the present application, referring to FIG. 1 and FIG. 2.

A modular panel lamp 100 according to the present embodiment comprises a surface frame component 110, a light source component 120, a backlight component 130, a drive component 140, and a wire outlet cover 150. The light source component 120 is connected with the surface frame component 110, the backlight component 130 is connected with the surface frame component 110, the drive component 140 is connected with the light source component 120, and the wire outlet cover 150 is mounted to the surface frame component 110. The modular panel lamp 100, as an entire lamp, is divided into a plurality of main components, the constituting parts and assembling methods of each component are not limited, and then the components are assembled. Bulk parts may be delivered or entire lamps may be sold according to the specific needs of customers. For the end customers, the components can be assembled in order according to the steps, it is unnecessary to seek professionals to carry out the assembly operation, and the operation is performed simply and quickly. Moreover, product parameters can be changed by replacing different structural members so as to obtain entire lamp products of different parameter types, which reduces the accumulation of inventory with different parameters, and also facilitates a transformation from common lamps to multifunctional lamps such as smart lamps, and therefore the modular panel lamp has high market flexibility.

FIG. 3 is an exploded schematic view of a structure of the surface frame component 110 of the modular panel lamp 100 according to the first embodiment of the present application, referring to FIG. 3.

Specifically, the surface frame component 110 comprises corner members 151 and four profiles connected in an end-to-end manner, the four profiles are detachably connected by the four corner members 151 and form a frame body, and both the light source component 120 and the backlight component 130 are disposed in the frame body. The four profiles comprise a wire outlet profile 111, a first profile 112, a second profile 113, and a third profile 114. The wire outlet profile 111 is disposed opposite to the first profile 112, and the second profile 113 is disposed opposite to the third profile 114; and the wire outlet profile 111 is provided with a wire outlet port 1107, which facilitates a connection of the light source component 120 and the drive component 140. The wire outlet profile 111 and the first profile 112 are further provided with a first fitting groove 1101 and a second fitting groove 1103, respectively, the light source component 120 is mounted in the first fitting groove 1101, and the backlight component 130 is mounted in the second fitting groove 1103. Both ends of each profile are provided with fixation engaging slots 1105 into which the respective corner members 151 are mounted, each corner member 151 is fixed to the respective profile by a connector(s) 153, the connector 153 is preferably a screw, and the corner member 151 may also be fixed to the profile by a bolt or other structures.

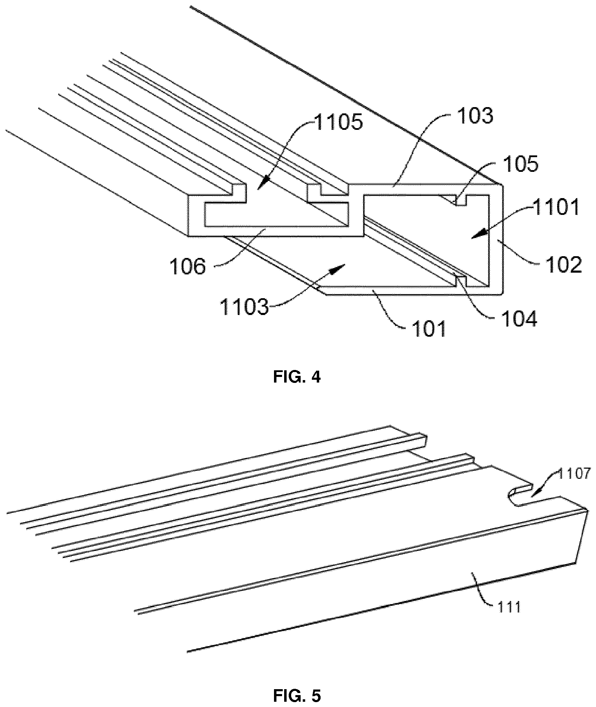

The surface frame component 110 is formed by splicing four profiles. When the four separate profiles are to be delivered, the packaging space can be effectively reduced so as to achieve the effect of reducing the transportation cost, as compared with the conventional aluminum frame. Moreover, the effect of a narrow bezel can be more easily achieved by means of splicing the profiles. With a narrower bezel, the modular panel lamp 100 has a larger light emitting area, which contributes to improved product quality and brings more competitive advantages. It will be readily understood that the first profile 112, the second profile 113, and the third profile 114 may have an identical structure for convenience of assembly and replacement, and may be interchanged during assembly. One end of the wire outlet profile 111 is provided with a wire outlet port 1107, and the remaining structure of the wire outlet profile is also identical to the structure of the first profile 112, the second profile 113, and the third profile 114. Here, the structure of the first profile 112 is taken as an example. FIG. 4 is a schematic structural view of an end surface of the first profile 112 of the modular panel lamp 100 according to the first embodiment of the present application, and FIG. 5 is schematic structural view of an end surface of the wire outlet profile 111 of the modular panel lamp 100 according to the first embodiment of the present application, referring to FIG. 4 and FIG. 5.

According to the invention, the first profile 112 comprises a first bottom wall 101, a top wall 103, and a side wall 102 which are integrally molded. The first bottom wall 101 and the top wall 103 are oppositely disposed, and are both connected with the side wall 102 to form a first groove. The first bottom wall 101 is provided with a first bump 104, the top wall 103 is provided with a second bump 105, and the first bump 104 and the second bump 105 are oppositely disposed so that the first groove is divided into two accommodating spaces, i.e., the first fitting groove 1101 and the second fitting groove 1103. The space formed by the first bump 104, the second bump 105, and the side wall 102 is the first fitting groove 1101 in which the light source component 120 is mounted. The second fitting groove 1103 is located on a side of the first bump 104 and the second bump 105 away from the side wall 102, and the backlight component 130 is mounted in the second fitting groove.

According to the invention, a mounting portion 106 is protruded from a side of the top wall 103 close to the first bottom wall 101, and the mounting portion 106 is provided with a fixation engaging slot 1105 into which the corner member 151 is mounted. The fixation engaging slot 1105 may be a through slot, or may be provided only at both ends to facilitate the mounting of the corner member 151. In the present embodiment, a through slot along the axial direction of the first profile 112 is used as the fixation engaging slot 1105. When the backlight component 130 is mounted into the second fitting groove 1103, the mounting portion 106, the second bump 105, and the first bottom wall 101 collectively serve the function of restricting the position of the backlight component 130. Preferably, the first bottom wall 101, the side wall 102, the top wall 103, the mounting portion 106, the first bump 104, and the second bump 105 are all integrally molded, that is to say, the first profile 112 is integrally molded.

The wire outlet profile 111 is additionally provided with a notch on the top wall 103, which serves as the wire outlet port 1107 for facilitating passage of an input wire 127 of the light source component 120 therethrough. The remaining structure of the wire outlet profile 111 is identical to the structure of the first profile 112. Detailed description is omitted here.

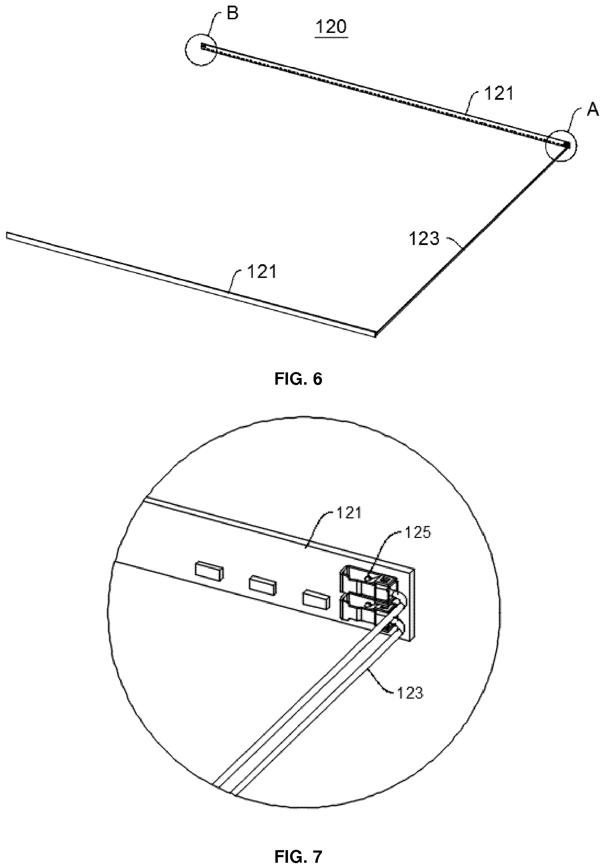

FIG. 6 is a schematic structural view of the light source component 120 of the modular panel lamp 100 according to the first embodiment of the present application, referring to FIG. 6 to FIG. 8.

The light source component 120 comprises two light source plates 121 disposed opposite to each other, and the two light source plates 121 are connected by two (light source plate) connecting wires 123. Specifically, one of the light source plates 121 is mounted in the first fitting groove 1101 of the wire outlet profile 111, and the other light source plate 121 is mounted in the first fitting groove 1101 of the first profile 112. Each of the light source plates 121 is provided with a connecting end 125, and preferably, the connecting end 125 is disposed at an end of the light source plate 121, and the respective connecting wire 123 is connected with the connecting end 125. Optionally, the connecting end 125 and the connecting wire 123 are connected in such a manner that the connecting wire is plugged into the connecting end. When it is necessary to replace the light source component 120, the connecting wires 123 can be quickly plugged or unplugged to improve the efficiency of replacement and assembly. Alternatively, in other embodiments, the connecting wires 123 are welded to the respective light source plates 121, and the structures of the connecting ends 125 may be omitted. In addition, at least one of the light source plates 121 is further provided with an input wire 127, and the input wire 127 passes through the wire outlet port 1107 and is connected with the drive component 140.

The light source component 120 in the present embodiment is no longer fixed to an aluminum frame by the conventional double-sided tape, but is firstly connected as a whole by using the connecting wire 123 to form a module. Furthermore, the light source component 120 is assembled by being directly inserted into the first fitting grooves 1101 of the wire outlet profile 111 and the first profile 112, then the replacement of the light source component 120 can be achieved by removal and insertion, so that the assembly and disassembly are more convenient.

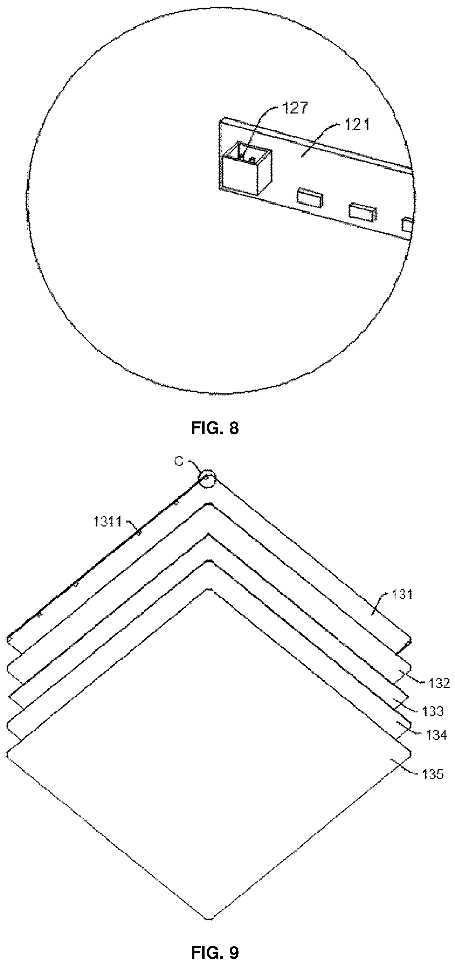

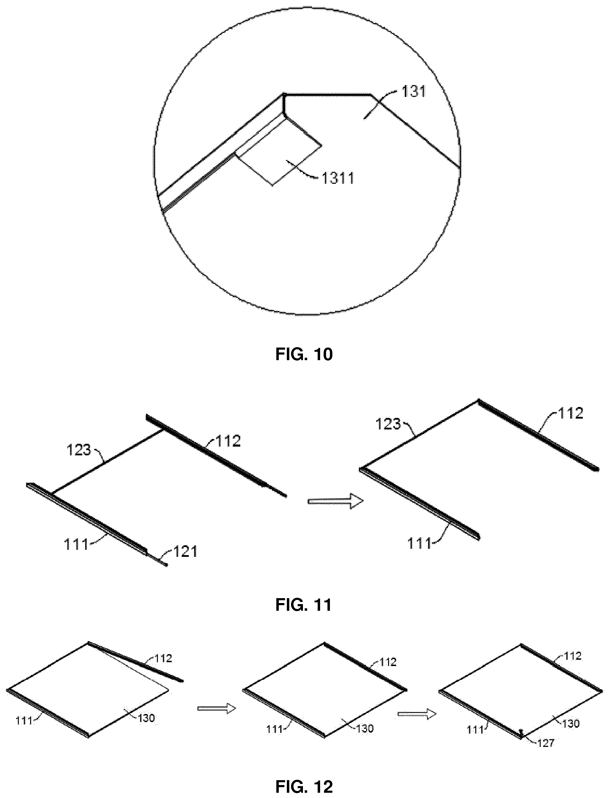

FIG. 9 is a schematic structural view of the backlight component 130 of the modular panel lamp 100 according to the first embodiment of the present application, referring to FIG. 9 and FIG. 10.

The backlight component 130 comprises a diffusion plate 135, a light guide plate 134, a light reflecting plate 133, a spacer 132, and a back plate 131, wherein the back plate 131 is provided with folded fixing portions 1311, and the folded fixing portions 1311 fix the diffusion plate 135, the light guide plate 134, the light reflecting plate 133, and the spacer 132 onto the back plate 131 so that the backlight component 130 is formed as whole in a "five-in-one" manner. That is to say, the spacer 132 is disposed on the back plate 131, the light reflecting plate 133 is disposed on the spacer 132, the light guide plate 134 is disposed on the light reflecting plate 133, the diffusion plate 135 is disposed on the light guide plate 134, and the backlight component 130 is formed as whole in a "five-in-one" manner by the folded fixing portions 1311 on the back plate 131, and then is mounted together into the second fitting groove 1103. Optionally, the folded fixing portions 1311 and the back plate 131 are integrally molded, and one or a plurality of the folded fixing portions 1311 may be provided. In the present embodiment, a plurality of folded fixing portions 1311 are provided to enable a more reliable fixation. If the customer has a requirement for UGR (Unified Glare Rating), the common diffusion plate 135 in the backlight component 130 can be directly replaced with a prismatic plate, and also the light guide plate 134 can be replaced with a light guide plate of different materials and thickness to change the product parameters to meet different needs of customers. Here, the spacer 132 can compensate for a gap caused by replacement of elements of different thicknesses, so that the backlight component 130 is more stable and less likely to shake.

The drive component 140 comprises a drive box 141 and an output wire 143, and the output wire 143 has one end connected with the drive box 141, and the other end connected with the input wire 127 of the light source component 120. The wire outlet cover 150 is mounted to the frame body and covers the wire outlet port 1107, so that the modular panel lamp 100 becomes more aesthetically pleasing. Preferably, the wire outlet cover 150 is provided with a wire-passing hole through which the input wire 127 is led out so as to be connected with the output wire 143. Optionally, the output wire 143 may be wired with male and female connectors, or may be a terminal wire to facilitate quick replacement of the drive component 140 to achieve a change of product parameters.

Optionally, the wire outlet cover 150 is detachably fixed to the surface frame component 110 by a structure such as a screw or a snap joint or the like, so that the output wire of the drive component 140 can be fixed and can be led out. Optionally, the output wire is wired with mating male and female connectors, so that the drive component can be quickly replaced to achieve a change of product parameters.

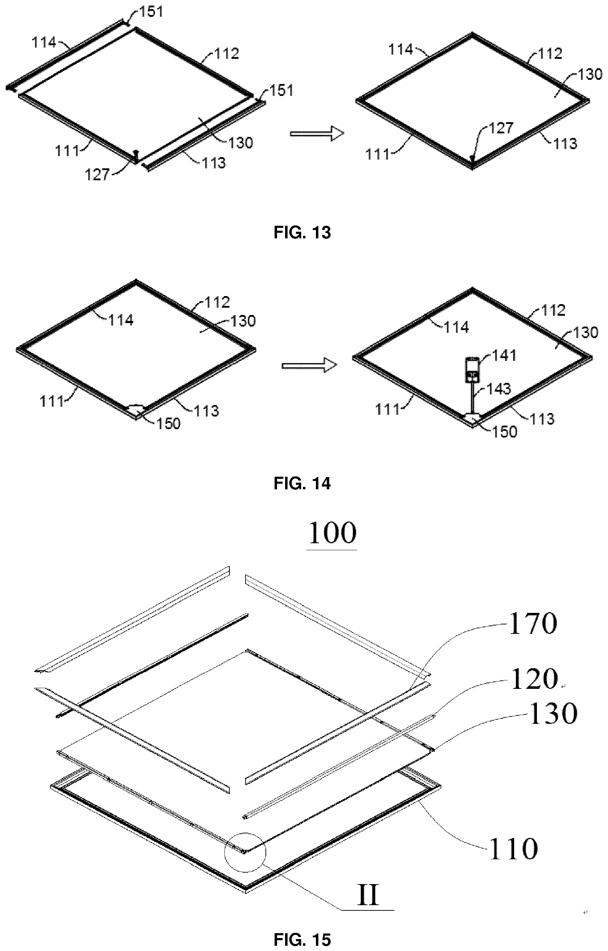

The modular panel lamp 100 according to the embodiment of the present application is assembled by the following process:
In a first step, the light source component 120 is installed. As shown in FIG. 11, the wire outlet profile 111 and the first profile 112 of the surface frame component 110 are taken out. Since the first profile 112, the second profile 113, and the third profile 114 have the same structure and can be interchanged, it is sufficient that the wire outlet profile 111 and any one of the remaining three profiles are taken out and placed in parallel and opposed to each other on a worktable. One light source plate 121 is inserted into the first fitting groove 1101 of the wire outlet profile 111, and the other light source plate 121 is inserted into the first fitting groove 1101 of the first profile 112, wherein it should be noticed that the input wire 127 of the light source plate should be disposed corresponding to the position of the wire outlet port 1107 of the wire outlet profile 111, and the input wire 127 is led out through the wire outlet port 1107.
In a second step, the backlight component 130 is installed. As shown in FIG. 12, the backlight component 130 is already formed as a whole in a five-in-one manner by the folded fixing portions 1311 of the back plate 131, and one end of the backlight component 130 is inserted into the second fitting groove 1103 of the wire outlet profile 111, and the other end of the backlight component 130 is inserted into the second fitting groove 1103 of the first profile 112.
In a third step, the frame body is spliced. As shown in FIG. 13, the remaining two profiles, i.e., the second profile 113 and the third profile 114, are taken out and placed in parallel and opposite to each other, and the four metal corner members 151 are respectively crammed into the fixation engaging slots 1105 of the second profile 113 and the third profile 114, and are inserted, in opposite directions, into the fixation engaging slots 1105 of the wire outlet profile 111 and the first profile 112. That is to say, the four profiles are spliced into a frame body, and the four corner members 151 are disposed at the four corners of the frame body, respectively. The four profiles are clamped by holders (clamps), and the corner members 151 are screwed to fix the four profiles.
In a fourth step, the wire outlet cover 150 and the drive component 140 are installed. As shown in FIG. 14, the wire outlet cover 150 is placed on the frame body, and the input wire 127 of the light source component 120 is led out through the wire outlet cover 150, wherein the input wire 127 is not limited to the form of a wire, and may be a terminal wire or may be a common tensile-resistant wire. The wire outlet cover 150 is fixed to the frame body by screws. Evidently, it is not limited thereto, and the wire outlet cover 150 may also be fixed by means of snap connection, bonding, riveting, or the like. Finally, the input wire 127 is connected with the output wire 143 of the drive component 140 to complete the assembly of the modular panel lamp.

### Second Embodiment (not claimed)

FIG. 15 is a schematic view of an overall structure of another modular panel lamp 100 according to a second embodiment of the present application. Referring to FIG. 15, the modular panel lamp 100 according to the present embodiment comprises a surface frame component 110, a backlight component 130, light source components 120, and a pressing strip component 170, wherein the backlight component 130 is mounted to the surface frame component 110, the light source components 120 are disposed at two ends of the backlight component 130 and electrically connected with the backlight component 130, the pressing strip component 170 abuts against an upper surface of the backlight component 130 and is engaged with the surface frame component 110 so that the backlight component 130 is clamped between the pressing strip component 170 and the surface frame component 110, and a clamping space for mounting is further formed between the pressing strip component 170 and the surface frame component 110, and the light source components 120 are accommodated in the clamping space for mounting.

In the present embodiment, the surface frame component 110 has a rectangular frame shape and is formed by welding four aluminum profiles, and the shapes of the backlight component 130 and the pressing strip component 170 are matched with that of the surface frame component 110 so that they are connected with each other to form an entire lamp. Evidently, here, the shape of the surface frame component 110 may be other shape such as being circular or rhombic, and is not specifically limited herein. In addition, the material of the surface frame component 110 may also be other lightweight materials such as magnesium aluminum alloy or plastic, and is not specifically limited herein.

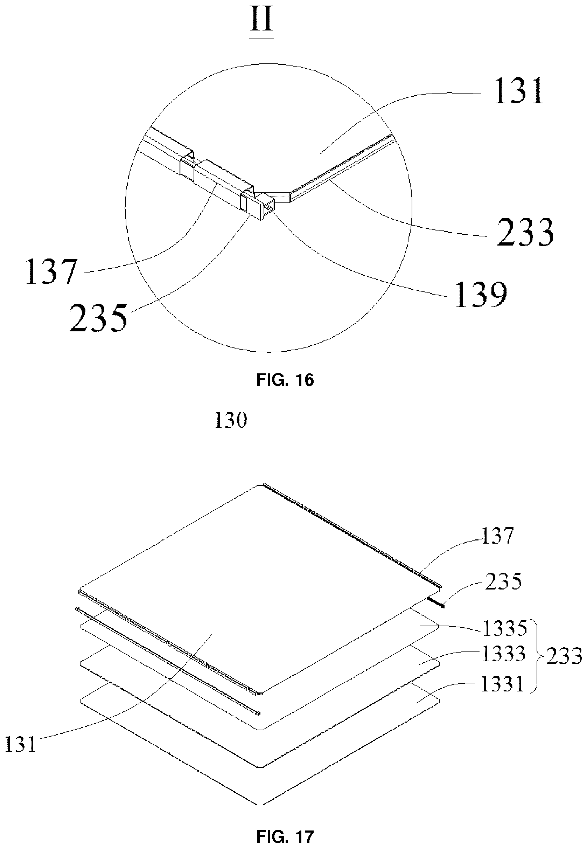

Referring to FIG. 16 in combination with FIG. 17, the backlight component 130 comprises a back plate 131, an optical component 233, and a PCB board 235, both ends of the back plate 131 have folded fixing portions (clamping frames) 137, wherein the folded fixing portion 137 extends between the surface frame component 110 and the pressing strip component 170, the optical component 233 is disposed on a bottom side of the back plate 131 and detachably connected with the back plate 131, the PCB board 235 is disposed in the folded fixing portion 137, and the light source components 120 are electrically connected with the PCB board 235 and disposed at both ends of the optical component 233, respectively.

In the present embodiment, the back plate 131 is a metal back plate 131, the metal back plate 131 also has a rectangular shape, and two ends of the metal back plate 131 are folded to form folded fixing portions 137. Specifically, each folded fixing portion 137 has an inverted U-shape and is overlapped on the surface frame component 110 so that the position of the folded fixing portion 137 is restricted when the pressing strip component 170 is engaged therewith. The PCB board 235 is disposed in the fold fixing portion 137, and serves as a connecter instead of the conventional electric wires to facilitate the wiring.

Further, the optical component 233 comprises a diffusion plate 1331, a light guide plate 1333, and a light reflecting plate 1335 which are disposed in an overlapping manner, wherein one side of the light reflecting plate 1335 is attached to the bottom of the back plate 131, one side of the light guide plate 1333 is attached to a side of the light reflecting plate 1335 that is remote from the back plate 131, and one side of the diffusion plate 1331 is attached to a side of the light guide plate 1333 that is remote from the light reflecting plate 1335.

It should be noted that, for the optical component 233 here, the optical plates of different materials and different thicknesses can be replaced according to the specific needs of the customers and the actual use environments so as to achieve a change of product parameters, and if the glare rating is required in the actual use environment, the common diffusion plate 1331 can be directly replaced with a prismatic plate, and at the same time the light guide plate is replaced with a light guide plate of a different material and thickness so as to achieve a change of product parameters.

In the present embodiment, the PCB board 235 is provided with electrical sockets 139, and the light source components 120 are plugged into the electrical sockets 139 respectively to facilitate a quick plugging of the light source components 120.

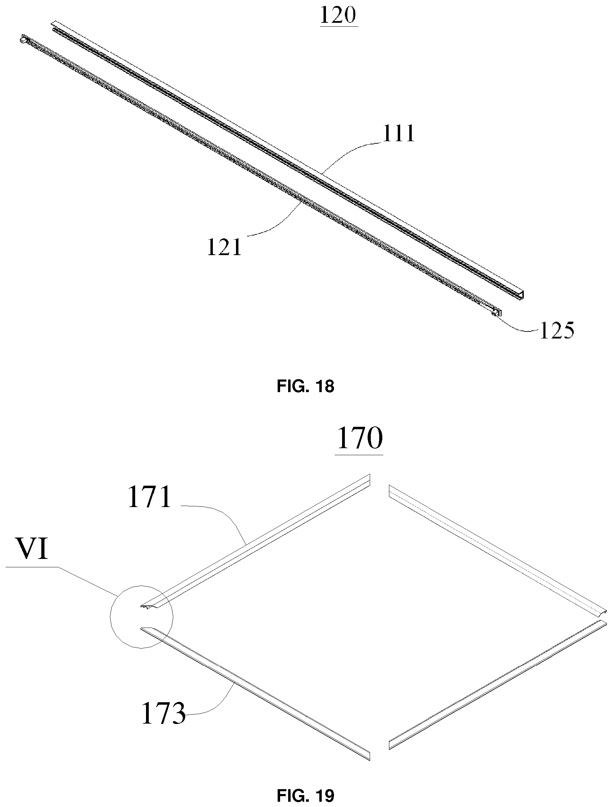

Referring to FIG. 18, the light source component 120 may comprise a wire outlet profile (heat dissipation aluminum frame) 111 and a light source plate 121. Here, only the wire outlet profile is described as an example, and similarly to the first embodiment, the wire outlet profile herein may be replaced with any of the first to third profiles. The wire outlet profile 111 is disposed between the pressing strip component 170 and the surface frame component 110 and is accommodated in the clamping space for mounting, and the light source plate 121 is embedded into the wire outlet profile 111 and electrically connected with the PCB board 235. Specifically, two light source components 120 are provided, and the two light source components 120 are respectively disposed at two ends of the optical component 233 and emit light toward the optical component 233. The light source plate 121 is provided with a plurality of LED lamp beads which are connected in series.

It should be noted that the wire outlet profile 111 herein may be replaced with other material having a good heat transfer effect such as a copper frame or an alloy frame, and is not specifically limited herein.

In the present embodiment, connecting ends (electrical terminals) 125 are provided at two ends of the light source plate 121, and the connecting ends 125 are detachably connected with the PCB board 235. Specifically, each connecting end 125 is plugged into the respective electrical socket 139 to achieve quick insertion/removal of the light source plate 121 into/from the PCB board 235.

In the present embodiment, the wire outlet profile 111 is provided with an accommodating groove, one side of the accommodating groove has an opening, the light source plate 121 is embedded into the accommodating groove, and the LED lamp beads on the light source plate 121 are disposed outwardly from the opening and are disposed opposite to the optical component 233 so as to serve the function of making light diverge toward the optical component 233.

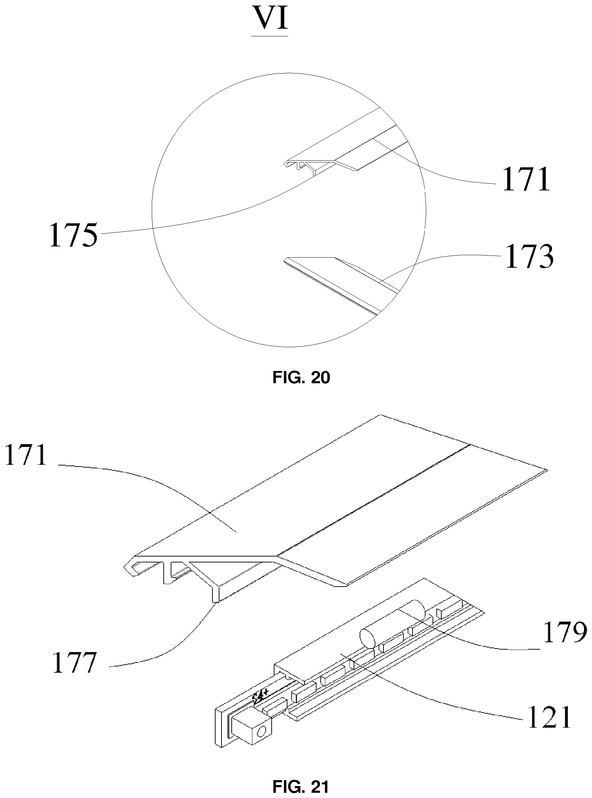

Referring to FIG. 19 in combination with FIG. 20, the pressing strip component 170 comprises light-incident-side pressing strips 171 and press-fit-side pressing strips 173, wherein both the light-incident-side pressing strips 171 and the press-fit-side pressing strips 173 are engaged with the surface frame component 110 to form a clamping space for mounting, and a press-fit frame is formed by the light-incident-side pressing strips 171 together with the press-fit-side pressing strips 173, and the press-fit frame is pressed against the upper surface of the back plate 131. Specifically, the press-fit frame has a rectangular shape, two light-incident-side pressing strips 171 are provided, two press-fit-side pressing strips 173 are provided, the two light-incident-side pressing strips 171 are disposed opposite to each other, the two press-fit-side pressing strips 173 are disposed opposite to each other, the light-incident-side pressing strip 171 is pressed against the wire outlet profile 111, and the press-fit-side pressing strip 173 is pressed against a respective folded fixing portion 137. Both the light-incident-side pressing strips 171 and the press-fit-side pressing strips 173 each have a snap-fit structure which is snap-fitted with the surface frame component 110, so that the pressing strip component 170 is engaged with the surface frame component 110 from four directions, and the multiple structural members are finally pressed together.

In the present embodiment, each light-incident-side pressing strip 171 has an elastic rib 175 on its side close to the surface frame component 110, and the elastic rib 175 extends into the clamping space for mounting and abuts against the wire outlet profile 111 for restricting the position of the wire outlet profile 111. Specifically, the elastic rib 175 abuts on the outer side of the wire outlet profile 111, so that the light source plate 121 can be closely fitted with the optical component 233 to facilitate emission of light from the light source into the optical component.

In the present embodiment, the light-incident-side pressing strips 171 and the press-fit-side pressing strips 173 are all plastic pressing strips, and are snap-fitted with the aluminum frame to achieve the function of pressing.

Optionally, the modular panel lamp 100 according to the present embodiment may further comprise an elastic member 179.

Referring to FIG. 21, the light-incident-side pressing strip 171 has an abutment rib 177 on its side close to the surface frame component 110, the elastic member 179 is disposed in the clamping space for mounting, and the abutment rib 177 extends into the clamping space for mounting and abuts against the elastic member 179 so that the elastic member 179 abuts against the wire outlet profile 111.

In the present embodiment, the elastic member 179 is a cylindrical rubber block, which has good elasticity and enables close fitting of the LED lamp beads with the optical component 233, so that the panel lamp has good consistency of parameters and appearance.

In a modular panel lamp according to the present embodiment, a backlight component is mounted to a surface frame component, light source components are disposed at two ends of the backlight component and are electrically connected with the backlight component, a pressing strip component abuts against an upper surface of the backlight component and is engaged with the surface frame component so that the backlight component is clamped between the pressing strip component and the surface frame component, and a clamping space for mounting is further formed between the pressing strip component and the surface frame component, and the light source components are accommodated in the clamping space for mounting. During actual installation, the backlight component is first placed on the surface frame component, and then the light source components are mounted into the clamping space for mounting between the backlight component and the surface frame component, and subsequently the pressing strip component is engaged with the surface frame component, and the backlight component is clamped between the pressing strip component and the surface frame component, so that the respective structural members are combined as a whole, and the installation of the modular panel lamp is completed. Since each structural member is formed by using a modular structure without being additionally provided with screws or being bonded by an adhesive, and each structural member has a single position and a simple structure, and therefore can be conveniently assembled and maintained. Compared with the prior art, the modular panel lamp described above has simple assembling process and high assembly efficiency, is convenient in replacement of structural members, and are very convenient in maintenance and replacement.

### Third Embodiment (not claimed)

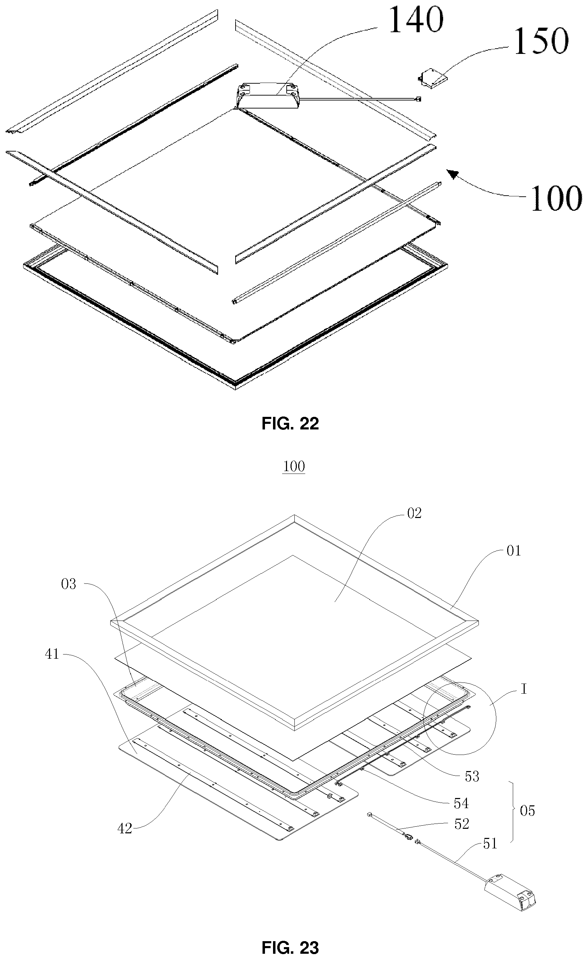

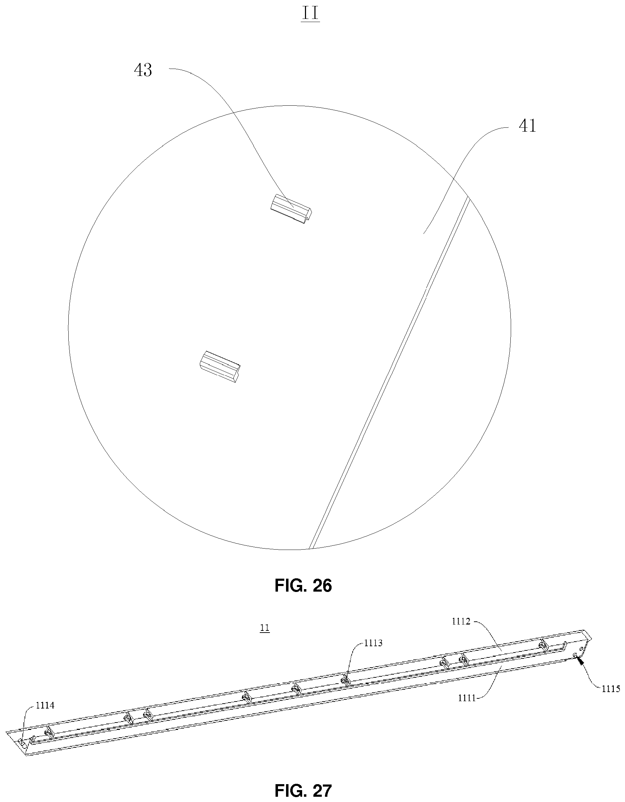

Referring to FIG. 23 and FIG. 26, an embodiment of the present application provides another modular panel lamp 100. The modular panel lamp 100 comprises a pressing strip component 01, a diffusion plate 02, a surface frame component (chassis) 03, a light source component 04, and a drive component (power source component) 05.

The surface frame component 03 is a frame body surrounded by four side edges, and the frame body is open at both ends. The pressing strip component 01 is disposed on an opening at one end of the surface frame component 03. The diffusion plate 02 is disposed between the pressing strip component 01 and the surface frame component 03, and the diffusion plate 02 is fixed between the pressing strip component 01 and the surface frame component 03, wherein the diffusion plate 02 is fixed between the pressing strip component 01 and the surface frame component 03 by being clamped by the pressing strip component 01 and the surface frame component 03. In this way, the diffusion plate 02 achieves sealing of the opening at one end of the surface frame component 03, with the end close to the pressing strip component 01. The light source component 04 is disposed on an opening at the other end of the surface frame component 03 and seals the opening at the end of the surface frame component 03 that is remote from the pressing strip component 01.

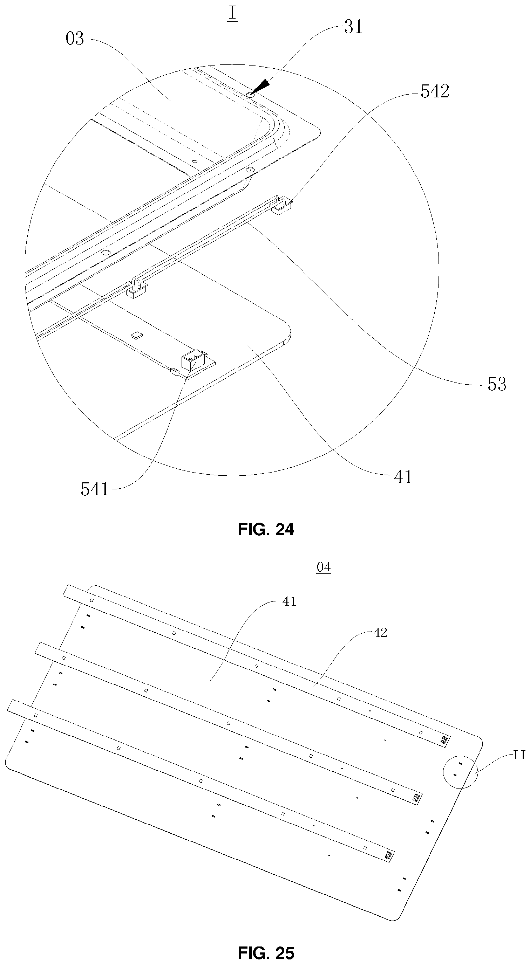

Refer to FIG. 24 in combination with FIG. 23. The drive component 05 is used for controlling turning on and off of the light source component 04 to achieve control of the light source component 04. In the present embodiment, the drive component 05 mainly comprises a driver 51, a lamp-body connecting wire 52, a (light-source-plate) connecting wire 53, and connecting ends 54.

Each of the connecting ends 54 has one end connected with the light source component 04, and the other end connected with the light-source-plate connecting wire 53. The lamp-body connecting wire 52 has one end connected with the light-source-plate connecting wire 53, and the other end connected with the driver 51. Here, the number of the connecting ends 54 is the same as the number of the light source plates 42 on the light source component 04. The light-source-plate connecting wire 53 is used for connecting the plurality of connecting ends 54 in series. The lamp-body connecting wire 52 is used for enabling an overall control of the connecting ends 54 by the driver 51.

It is worth noting that the connecting ends 54 have various structures and forms, and any form and structure are possible as long as the connection between the light-source-plate connecting wire 53 and the light source plates 42 can be achieved. Preferably, in the present embodiment, each connecting end 54 comprises a first terminal 541 and a second terminal 542. The first terminal 541 is disposed on the light source plate 42 and electrically connected with the light source plate 42. The second terminal 542 is electrically connected with the light-source-plate connecting wire 53. The first terminal 541 and the second terminal 542 are connected in a plugged form. Therefore, one of the first terminal 541 and the second terminal 542 is a slot and the other one is a plug.

Refer to FIG. 25 and FIG. 26. The light source component 04 mainly comprises a fixing plate 41 and a light source plate 42. A plurality of light source plates 42 are provided, and the light source plates 42 are disposed on the fixing plate 41. Preferably, in the present embodiment, the plurality of light source plates 42 are disposed at uniform intervals on the fixing plate 41. In order to achieve quick detachment and replacement of the light source plates 42, the light source plates 42 are detachably disposed on the fixing plate 41.

The light source plates 42 may be connected with the fixing plate 41 in various forms and by various structures. Preferably, in the present embodiment, first positioning portions 43 are disposed on the fixing plate 41, and the specific structure of the first positioning portions 43 is a buckle. In order to stably dispose the light source plates 42 on the fixing plate 41, two first positioning portions 43 form a group, and multiple groups are disposed at positions of the fixing plate 41 where the light source plates 42 are to be mounted, so that the light source plates 42 can be quickly and stably fixed on the fixing plate 41. Since the light source plates 42 can be quickly disassembled from or assembled on the fixing plate 41, when the user needs to use a panel lamp of different parameters, the light source plates 42 can be replaced with light source plates 42 of different models or parameters, which meets the needs of the customer, and also facilitates rapid sale of products, and avoids the accumulation of inventory of certain types of light source plates 42 due to the singularity of the mounting of the light source plates 42.

It is worth noting that when a limited number of the light source plates 42 are disposed on the fixing plate 41, in order to meet the customers' demands for use of panel lamps of different models, different fixing plates 41 can be spliced and used, for example, a fixing plate 41 with a size of 300 mm*600 mm may be constituted by one fixing plate 41 with a size of 300 mm*600 mm; a fixing plate 41 with a size of 600 mm*600 mm may be constituted by vertically splicing two fixing plates 41 each having a size of 300 mm*600 mm; a fixing plate 41 with a size of 300 mm*1200 mm may be constituted by horizontally splicing two fixing plates 41 each having a size of 300 mm*600 mm; and a fixing plate 41 with a size of 600 mm*1200 mm may be constituted by horizontally and vertically arranging and splicing four fixing plates 41 each having a size of 300 mm*600 mm. Evidently, the fixing plates 41 have various sizes, and it is also possible to splice fixing plates 41 of 300 mm*300 mm or fixing plates 41 of 300 mm*600 mm or fixing plates 41 with other sizes. In this way, the customers' demands for the use of panel lamps of different parameters and models can be fully met by the quick disassembly and assembly of the light source plates 42 and the splicing of the fixing plates 41.

Refer to FIG. 27. The pressing strip component 01 is mainly used for fixing the diffusion plate 02 between the pressing strip component 01 and the surface frame component 03. The pressing strip component 01 has various structures and forms. Preferably, in the present embodiment, the pressing strip component 01 is a frame body formed by sequentially connecting four frames 11 having the same shape and structure in an end-to-end manner.

Specifically, each frame 11 comprises a first plate member 1111 and a second plate member 1112. The first plate member 1111 and the second plate member 1112 are connected to form an elongated frame 11. Referring to FIG. 27, in order to better fix the diffusion plate 02, second positioning portions 1113 are disposed on the first plate member 1111, and positioning holes 31 are provided at an end of the surface frame component 03 at which the diffusion plate 02 is disposed. The connection between the first plate member 1111 and the surface frame component 03 can be achieved by fitting of the second positioning portions 1113 into the positioning holes 31. In this way, the diffusion plate 02 can be stably fixed between the first plate member 1111 and the surface frame component 03.

The second positioning portions 1113 have various forms and structures. Preferably, in the present embodiment, each second positioning portion 1113 is an engaging member with a larger end. When the engaging member passes through the respective positioning hole 31, the larger end can prevent the engaging member from being withdrawn from the positioning hole 31, so as to achieve a stable connection between the first plate member 1111 and the surface frame component 03. The second positioning portions 1113 are disposed at intervals on the first plate member 1111.

In addition, the four frames 11 may be connected in various forms and by various structures. Preferably, in the present embodiment, a connecting pin 1114 is disposed at one end of the first plate member 1111, and a connecting hole 1115 is provided at the other end of the first plate member 1111. In this way, different frames 11 can be connected with each other by fitting of the connecting pins 1114 into the respective connecting holes 1115.

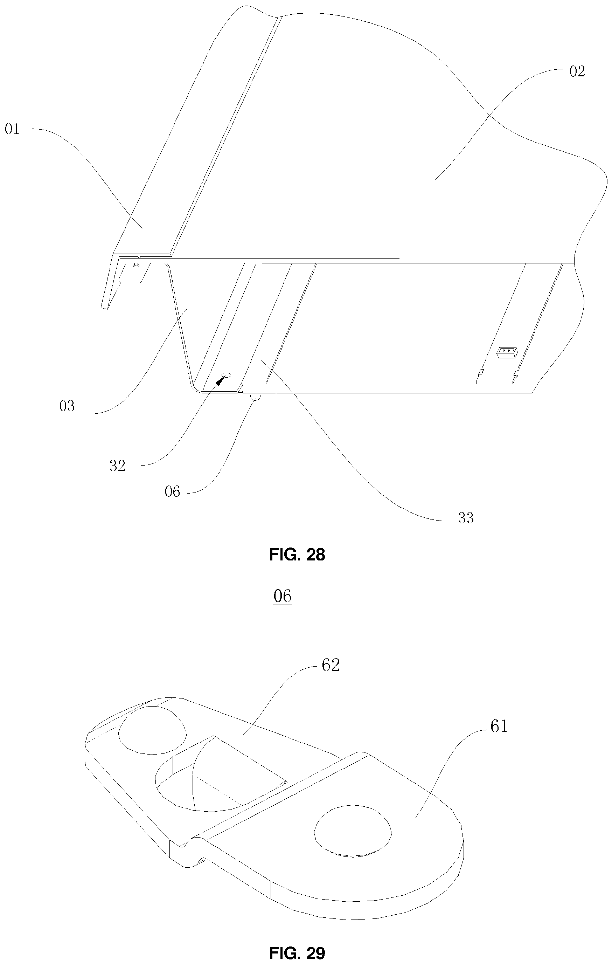

Refer to FIG. 28 and FIG. 29. In order to stably dispose the light source component 04 on the surface frame component 03, preferably, in the present embodiment, the light source component 04 is fixed by means of providing a rotating member 06 on the surface frame component. Specifically, fixing holes 32 are provided at an end of the surface frame component 03 at which the fixing plate 41 is disposed, wherein the fixing holes 32 are disposed at intervals, and the number of the fixing holes is set as needed.

A connecting portion 61 of the rotating member 06 is disposed on the fixing hole 32 via a connector, so that the rotation of the rotating member 06 can be achieved. Preferably, in the present embodiment, a rivet is used as the connector, and the rotating member 06 is disposed on the surface frame component 03 by riveting. When it is necessary to fix the fixing plate 41, the rotating member 06 is rotated around the fixing hole 32, and an abutment portion 62 is abutted against the fixing plate 41 to form a stable fixing of the fixing plate 41.

A modular panel lamp 100 according to the present embodiment mainly has the following several advantageous effects:
The light source plates 42 are detachably disposed on the fixing plate 41. In this way, the light source plates 42 can be selected according to requirements to meet different customers' requirements for different panel lamp parameters, and overstocked inventory due to a single sale model of the light source plates 42 will not be caused during sale. The customers' demands for the use of panel lamps of different parameters and models can be fully met by the quick disassembly and assembly of the light source plates 42 and the splicing of the fixing plates 41.

The diffusion plate 02 can be stably fixed between the first plate member 111 and the surface frame component 03 by providing the second positioning portions 113. Different frames 11 are connected by fitting of the connecting pins 1114 into the connecting holes 1115. The fixing plate 41 is stably fixed by providing the rotating member 06. All these connections can achieve the quick assembly and disassembly of the panel lamp, which involve simple operations, and facilitate use of the panel lamp by the user.

The drive component 05 is provided to connect the mounted light source plates 42 together to achieve the control of the panel lamp, and the drive component 05 and the light source plates 42 are connected in a simple form, which facilitates the quick replacement of the light source plates 42 so that the light source plate can be replaced quickly and rapidly.

In summary, the modular panel lamp 100 according to the present application has the following advantageous effects in several aspects:
The modular panel lamp 100 according to the present application, as an entire lamp, is divided into a plurality of components, the constituting parts and assembling methods of the components are not limited, and then the components are assembled. Bulk parts may be delivered or entire lamps may be sold according to the specific needs of customers. For the end customers, the components can be assembled in order according to the steps, it is unnecessary to seek professionals to carry out the assembly operation, the operation is performed simply and quickly, and the assembling process is greatly simplified. Secondly, different structural members such as light source components, backlight components, or drive components can be replaced to achieve changes of product parameters, so that the entire lamp products of different parameters and types are obtained, and the accumulation of inventory of different parameters can be reduced, and thus the modular panel lamp has high market flexibility. Then, since a modular assembling method is used, the number of the structural members to be assembled is reduced, which also facilitates the automated assembly and the rapid replacement of the light source component and the drive component, so that the entire lamp product is changed in color temperature and luminous flux and is transformed from an common lamp to a smart lamp. Finally, the surface frame component is formed by splicing four profiles, the packaging of the four profiles can effectively reduce the transportation cost, and meanwhile, the spliced frame body makes it easier to achieve an effect of narrow bezel to increase the light emitting area of the lamp.

## Claims

1. A modular panel lamp (100), comprising a surface frame component (110, 03), a light source component (120, 04), a backlight component (130, 02), and a drive component (140, 05), wherein the light source component (120, 04) is connected with the surface frame component (110, 03), the backlight component (130, 02) is connected with the surface frame component (110, 03), and the drive component (140, 05) is connected with the light source component (120, 04);
wherein the surface frame component (110, 03) comprises four profiles connected in an end-to-end manner, wherein the four profiles are detachably connected to form a frame body, and both the light source component (120, 04) and the backlight component (130, 02) are disposed in the frame body;
the four profiles comprise a wire outlet profile (111), a first profile (112), a second profile (113), and a third profile (114); the wire outlet profile (111) is disposed opposite to the first profile (112), and the second profile (113) is disposed opposite to the third profile (114); and the wire outlet profile (111) is provided with a wire outlet port (1107),
the wire outlet profile (111) and the first profile (112) are each further provided with a first fitting groove (1101) and a second fitting groove (1103), the light source component (120, 04) is mounted in the first fitting groove (1101), and the backlight component (130, 02) is mounted in the second fitting groove (1103); the four profiles are connected by using corner members (151); and both ends of each of the profiles are provided with fixation engaging slots (1105) in which the corner members (151) are mounted respectively; and
the first profile (112) comprises a first bottom wall (101), a top wall (103), and a side wall (102) which are integrally molded, the first bottom wall (101) and the top wall (103) are oppositely disposed, and are both connected with the side wall (102) to form a first groove;
**characterized in that**:
the first bottom wall (101) is provided with a first bump (104), the top wall (103) is provided with a second bump (105), and the first bump (104) and the second bump (105) are oppositely disposed so that the first groove is divided into the first fitting groove (1101) and the second fitting groove (1103);
a mounting portion (106) is protruded from a side of the top wall (103) close to the first bottom wall (101), the mounting portion (106) is provided with the fixation engaging slot (1105), the mounting portion (106), the second bump (105), and the first bottom wall (101) collectively define the second fitting groove (1103) and serve the function of restricting the position of the backlight component (130).

2. The modular panel lamp (100) according to claim 1, wherein the light source component (120, 04) comprises two light source plates (121, 42) disposed opposite to each other, and the two light source plates (121, 42) are connected by a connecting wire; one of the light source plates (121, 42) is mounted in the first fitting groove (1101) of the wire outlet profile (111), and the other of the light source plates (121, 42) is mounted in the first fitting groove (1101) of the first profile (112).

3. The modular panel lamp (100) according to claim 2, wherein each of the light source plates (121, 42) is provided with a connecting end (125, 54), and the connecting wire is connected with the connecting end (125, 54); or
the connecting wire is welded to the light source plate (121, 42).

4. The modular panel lamp (100) according to claim 3, wherein at least one of the light source plates (121, 42) is further provided with an input wire (127) which is led out through the wire outlet port (1107) and is connected with the drive component (140, 05).

5. The modular panel lamp (100) according to claim 4, wherein the drive component (140, 05) comprises a drive box (141) and an output wire (143), wherein the output wire (143) has one end connected with the drive box (141) and the other end connected with the input wire (127), and preferably, the modular panel lamp (100) further comprises a wire outlet cover (150) which is mounted to the frame body and covers the wire outlet port (1107).

6. The modular panel lamp according to any one of claims 1 to 5, wherein the backlight component (130, 02) comprises a diffusion plate (135, 1331, 02), a light guide plate, a light reflecting plate (133, 1335), a spacer (132), and a back plate (131), wherein the back plate (131) is provided with a folded fixing portion (137, 1311) by which the diffusion plate (135, 1331, 02), the light guide plate, the light reflecting plate (133, 1335), and the spacer (132) are fixed onto the back plate (131); and the back plate (131) is disposed in the second fitting groove (1103).

## Patentansprüche

1. Modulare Plattenlampe (100), mit einer Oberflächenrahmenkomponente (110, 03), einer Lichtquellenkomponente (120, 04), einer Hintergrundlichtkomponente (130, 02) und einer Ansteuerungskomponente (140, 05), bei der die Lichtquellenkomponente (120, 04) mit der Oberflächenrahmenkomponente (110, 03) verbunden ist, die Hintergrundlichtkomponente (130, 02) mit der Oberflächenrahmenkomponente (110, 03) verbunden ist, und die Ansteuerungskomponente (140, 05) mit der Lichtquellenkomponente (120, 04) verbunden ist;
bei der die Oberflächenrahmenkomponente (110, 03) vier Profile aufweist, die in einer Endezu-Ende-Weise verbunden sind, bei der die vier Profile zum Ausbilden eines Rahmenkörpers abnehmbar verbunden sind, und sowohl die Lichtquellenkomponente (120, 04) als auch die Hintergrundlichtkomponente (130, 02) in dem Rahmenkörper angeordnet sind;
die vier Profile ein Drahtaustrittsprofil (111), ein erstes Profil (112), ein zweites Profil (113) und ein drittes Profil (114) umfassen; das Drahtaustrittsprofil (111) dem ersten Profil (112) gegenüberliegend angeordnet ist, und das zweite Profil (113) dem dritten Profil (114) gegenüberliegend angeordnet ist; und das Drahtaustrittsprofil (111) mit einer Drahtaustrittsöffnung (1107) versehen ist,
das Drahtaustrittsprofil (111) und das erste Profil (112) jeweils ferner mit einer ersten Anbringungsnut (1101) und einer zweiten Anbringungsnut (1103) versehen sind, die Lichtquellenkomponente (120, 04) in der ersten Anbringungsnut (1101) montiert ist, und die Hintergrundlichtkomponente (130, 02) in der zweiten Anbringungsnut (1103) montiert ist; die vier Profile unter Verwendung von Eckbauteilen (151) verbunden sind; und beide Enden jedes der Profile mit Befestigungseingriffsschlitzen (1105), in denen die Eckbauteile (151) respektive montiert sind, versehen sind; und
das erste Profil (112) eine erste untere Wand (101), eine obere Wand (103) und eine Seitenwand (102), die integral geformt sind, aufweist, die erste untere Wand (101) und die obere Wand (103) gegenüberliegend angeordnet sind und beide mit der Seitenwand (102) zum Ausbilden einer ersten Nut verbunden sind;
**dadurch gekennzeichnet, dass**:
die erste untere Wand (101) mit einer ersten Erhebung (104) versehen ist, die obere Wand (103) mit einer zweiten Erhebung (105) versehen ist, und die erste Erhebung (104) und die zweite Erhebung (105) gegenüberliegend so angeordnet sind, dass die erste Nut in die erste Anbringungsnut (1101) und die zweite Anbringungsnut (1103) unterteilt ist;
ein Montageabschnitt (106) von einer Seite der oberen Wand (103) nahe an der ersten unteren Wand (101) vorsteht, der Montageabschnitt (106) mit dem Befestigungseingriffsschlitz (1105) versehen ist, der Montageabschnitt (106), die zweite Erhebung (105) und die erste untere Wand (101) kollektiv die zweite Anbringungsnut (1103) definieren und der Funktion eines Begrenzens der Position der Hintergrundlichtkomponente (130) dienen.

2. Modulare Plattenlampe (100) nach Anspruch 1, bei der die Lichtquellenkomponente (120, 04) zwei Lichtquellenplatten (121, 42), die einander gegenüberliegend angeordnet sind, aufweist, und die zwei Lichtquellenplatten (121, 42) durch einen Verbindungsdraht verbunden sind; eine der Lichtquellenplatten (121, 42) in der ersten Anbringungsnut (1101) des Drahtaustrittsprofils (111) montiert ist, und die andere der Lichtquellenplatten (121, 42) in der ersten Anbringungsnut (1101) des ersten Profils (112) montiert ist.

3. Modulare Plattenlampe (100) nach Anspruch 2, bei der jede der Lichtquellenplatten (121, 42) mit einem Verbindungsende (125, 54) versehen ist, und der Verbindungsdraht mit dem Verbindungsende (125, 54) verbunden ist; oder
der Verbindungsdraht an die Lichtquellenplatte (121, 42) geschweißt ist.

4. Modulare Plattenlampe (100) nach Anspruch 3, bei der mindestens eine der Lichtquellenplatten (121, 42) ferner mit einem Eingangsdraht (127) versehen ist, der durch die Drahtaustrittsöffnung (1107) herausgeführt ist und mit der Ansteuerungskomponente (140, 05) verbunden ist.

5. Modulare Plattenlampe (100) nach Anspruch 4, bei der die Ansteuerungskomponente (140, 05) eine Ansteuerungsbox (141) und einen Ausgangsdraht (143) aufweist, bei der der Ausgangsdraht (143) ein Ende, das mit der Ansteuerungsbox (141) verbunden ist, und das andere Ende, das mit dem Eingangsdraht (127) verbunden ist, aufweist, und die modulare Plattenlampe (100) bevorzugt ferner eine Drahtaustrittsabdeckung (150) aufweist, die an dem Rahmenkörper montiert ist und die Drahtaustrittsöffnung (1107) bedeckt.

6. Modulare Plattenlampe (100) nach einem der Ansprüche 1 bis 5, bei der die Hintergrundlichtkomponente (130, 02) eine Diffusionsplatte (135, 1331, 02), eine Lichtführungsplatte, eine lichtreflektierende Platte (133, 1335), einen Abstandshalter (132) und eine Rückenplatte (131) aufweist, bei der die Rückenplatte (131) mit einem gefalteten Befestigungsabschnitt (137, 1311) versehen ist, durch den die Diffusionsplatte (135, 1331, 02), die Lichtführungsplatte, die lichtreflektierende Platte (133, 1335) und der Abstandshalter (132) auf der Rückenplatte (131) befestigt sind; und die Rückenplatte (131) in der zweiten Anbringungsnut (1103) angeordnet ist.

## Revendications

1. Lampe de panneau modulaire (100), comprenant un composant de cadre de surface (110, 03), un composant de source de lumière (120, 04), un composant de rétroéclairage (130, 02), et un composant de pilotage (140, 05), dans laquelle le composant de source de lumière (120, 04) est relié au composant de cadre de surface (110, 03), le composant de rétroéclairage (130, 02) est relié au composant de cadre de surface (110, 03), et le composant de pilotage (140, 05) est relié au composant de source de lumière (120, 04) ;
dans laquelle le composant de cadre de surface (110, 03) comprend quatre profils reliés de bout en bout, dans laquelle les quatre profils sont reliés de manière détachable pour former un corps de cadre, et à la fois le composant de source de lumière (120, 04) et le composant de rétroéclairage (130, 02) sont disposés dans le corps de cadre ;
les quatre profils comprennent un profil de sortie de fil (111), un premier profil (112), un deuxième profil (113), et un troisième profil (114) ; le profil de sortie de fil (111) est disposé à l'opposé du premier profil (112), et le deuxième profil (113) est disposé à l'opposé du troisième profil (114) ; et le profil de sortie de fil (111) est pourvu d'un orifice de sortie de fil (1107),
le profil de sortie de fil (111) et le premier profil (112) sont chacun pourvus en outre d'une première rainure d'adaptation (1101) et d'une deuxième rainure d'adaptation (1103), le composant de source de lumière (120, 04) est monté dans la première rainure d'adaptation (1101), et le composant de rétroéclairage (130, 02) est monté dans la deuxième rainure d'adaptation (1103) ; les quatre profils sont reliés en utilisant des éléments de coin (151) ; et les deux extrémités de chacun des profils sont pourvues de fentes d'engagement de fixation (1105) dans lesquelles les éléments de coin (151) sont respectivement montés ; et
le premier profil (112) comprend une première paroi inférieure (101), une paroi supérieure (103), et une paroi latérale (102) qui sont moulées d'un seul tenant, la première paroi inférieure (101) et la paroi supérieure (103) sont disposées à l'opposé l'une de l'autre et sont toutes les deux reliées à la paroi latérale (102) pour former une première rainure ;
**caractérisée en ce que** :
la première paroi inférieure (101) est pourvue d'un premier bossage (104), la paroi supérieure (103) est pourvue d'un deuxième bossage (105), et le premier bossage (104) et le deuxième bossage (105) sont disposés à l'opposé l'un de l'autre de sorte que la première rainure soit divisée en la première rainure d'adaptation (1101) et la deuxième rainure d'adaptation (1103) ;
une partie de montage (106) fait saillie depuis un côté de la paroi supérieure (103) proche de la première paroi inférieure (101), la partie de montage (106) est pourvue de la fente d'engagement de fixation (1105), la partie de montage (106), le deuxième bossage (105) et la première paroi inférieure (101) définissent collectivement la deuxième rainure d'adaptation (1103) et servent à restreindre la position du composant de rétroéclairage (130).

2. Lampe de panneau modulaire (100) selon la revendication 1, dans laquelle le composant de source de lumière (120, 04) comprend deux plaques de source de lumière (121, 42) disposées à l'opposé l'une de l'autre, et les deux plaques de source de lumière (121, 42) sont reliées par un fil de liaison ; l'une des plaques de source de lumière (121, 42) est montée dans la première rainure d'adaptation (1101) du profil de sortie de fil (111), et l'autre des plaques de source de lumière (121, 42) est montée dans la première rainure d'adaptation (1101) du premier profil (112).

3. Lampe de panneau modulaire (100) selon la revendication 2, dans laquelle chacune des plaques de source de lumière (121, 42) est pourvue d'une extrémité de liaison (125, 54), et le fil de liaison est relié à l'extrémité de liaison (125, 54) ; ou
le fil de liaison est soudé à la plaque de source de lumière (121, 42).

4. Lampe de panneau modulaire (100) selon la revendication 3, dans laquelle au moins l'une des plaques de source de lumière (121, 42) est en outre pourvue d'un fil d'entrée (127) qui sort à travers l'orifice de sortie de fil (1107) et est relié au composant de pilotage (140, 05).

5. Lampe de panneau modulaire (100) selon la revendication 4, dans laquelle le composant de pilotage (140, 05) comprend un boîtier de pilotage (141) et un fil de sortie (143), dans laquelle le fil de sortie (143) comporte une extrémité reliée au boîtier de pilotage (141) et l'autre extrémité reliée au fil d'entrée (127), et préférentiellement la lampe de panneau modulaire (100) comprend en outre un couvercle de sortie de fil (150) qui est monté sur le corps de cadre et recouvre l'orifice de sortie de fil (1107).

6. Lampe de panneau modulaire (100) selon l'une quelconque des revendications 1 à 5, dans laquelle le composant de rétroéclairage (130, 02) comprend une plaque de diffusion (135, 1331, 02), une plaque de guide de lumière, une plaque de réflexion de lumière (133, 1335), une entretoise (132), et une contre-plaque (131), dans laquelle la contre-plaque (131) est pourvue d'une partie de fixation repliée (137, 1311) par laquelle la plaque de diffusion (135, 1331, 02), la plaque de guide de lumière, la plaque de réflexion de lumière (133, 1335) et l'entretoise (132) sont fixées sur la contre-plaque (131) ; et la contre-plaque (131) est disposée dans la deuxième rainure d'adaptation (1103).
